# EUROPEAN PATENT SPECIFICATION

(11) **EP 0 464 862 B1**
(45) Date of publication and mention of the grant of the patent: **14.08.1996**
(21) Application number: 91113406.2
(22) Date of filing: 09.05.1989
(51) Int. Cl.: B29D 30/30

(54) **Tyre building machine and method**
Verfahren und Vorrichtung zum Reifenaufbau
Procédé et dispositif de fabrication d'un pneu

(30) Priority: 26.05.1988 US 198889; 26.05.1988 US 199081; 26.05.1988 US 199080; 26.05.1988 US 198888
(43) Date of publication of application: 08.01.1992
(62) Divisional of application: 89108323.0
(73) Proprietor: Uniroyal Goodrich Licensing Services, Inc., Greenville, South Carolina 29605 (US)
(72) Inventor: Bailey, David William, Waterloo, Ontario N2T 1R3 (CA)
(74) Representative: Selting, Günther, Dipl.-Ing.

(56) References cited:
- EP-A- 0 032 353
- EP-A- 0 201 653
- FR-A- 2 280 498
- FR-A- 2 496 616
- US-A- 4 398 988
- US-A- 4 457 802

## Description

This invention relates to a tire building machine including a robot for transporting a tire carcass and a green tire according to the preamble of claim 1 and a method of operation.

Pneumatic tires of the bias type are generally built commercially in a "flat band" and subsequently expanded to the toroid shape in a curing mold. While building such tires, the strip material including the tread strips are applied directly over a laminated tire carcass while in a flat band orientation.

Conversely, pneumatic tires of the radial type are generally built commercially by the "toroid" method. This method requires a first stage tire building machine for constructing the carcass in a flat band configuration and a second stage tire building machine for constructing the breaker and tread strips and applying them to the carcass. At the second stage machine, the carcass is supported on a first drum where it is expanded into a toroid shape. The tread and breaker strips are separately built on a second drum and then transferred onto the periphery of the supported carcass to form the green tire ready for vulcanization.

Various approaches to continuous and automatic tire building machines and their components are disclosed in the literature. Note for example, U.S.-A-1,700,526, 3,756,882, 3,844,871, 4,134,783, 4,197,155, 4,230,517, 4,268,330, 4,443,290. Although many such advances are noteworthy to one extent or another, none achieves the objective of a tire building machine which is continuous and automatic, efficient, rapid and economical in its operation, by the use of an especially designed robot and a method for operating the same.

As illustrated by the great number of prior patents as well as commercial devices, efforts are continuously being made in an attempt to improve tire building machines and methods to render them more effective, rapid and economical. None of these previous efforts, inclusive EP-A-0 032 353, describing an apparatus for off-loading a vertically orientated uncured tire from a tire building drum being provided with a tire embracing means symmetrically engageable with the exterior surface of the tire in its horizontal position and cooperating with a separate chucking means for rotating the tire from its vertical orientation to a horizontal orientation and to lift it above the tire building machine, however, provides the benefits attendant with the present invention. The present invention achieves its intended purposes, objects and advantages over the prior art devices through the features combined in the characterizing clauses of claims 1 and 3, with the use of a minimum number of functioning parts, at a reasonable cost to manufacture, and by employing only readily available materials.

Therefore, it is an object of this invention to provide an improved robot for a tire building machine including a first station for receiving and supporting a first stage tire carcass; a second station axially offset from the first station for assembling a breaker and tread cylinder; a servicer for feeding breaker strip material to the second station to form a breaker cylinder; a tread conveyor for feeding tread strip material to the second station over the breaker cylinder to form a breaker and tread cylinder; a transferring to transport the breaker and tread cylinder; a transfer device to transport the breaker and tread cylinder from the second station onto the periphery of a carcass at the first station for the assembly of a green tire and to then transport a green tire from the first station to an intermediate location; the robot to transport a carcass to the first station and a green tire from the transfer ring; and control means to coordinate the movement of the servicer, conveyor, transfer ring and robot in a continuous and automatic cycle of operation in order to continuously and automatically move components to and through the tire building machine.

The invention is defined by the appended claims 1 to 3 with a specific embodiment shown in the attached drawings.

The tire building machine further includes an input station adapted to support a carcass to be transported by the robot to the first station and an output station adapted to receive a green tire transported thereto by the robot. The control means is adapted to receive signals from the servicer and conveyor indicative of the length of the breaker and tread strips and to vary the speed of movement of the servicer and conveyor in response thereto. The control means is programmable by an operator. The machine further includes means associated with the conveyor belts for driving the belts as well as the conveyed material, and for inputting the control means as a function of conveyor belt and material location along the sheet feed path.

In addition, for the purpose of summarizing the invention, the invention may be incorporated into a second stage tire building machine including a first station having a first rotatable drum for receiving and supporting a first stage tire carcass; an input station adapted to support the carcass to be transported to the first drum; a second station having a second rotatable drum axially aligned with and offset from the first rotatable drum for assembling a breaker and tread cylinder; a servicer for feeding breaker strip material to the second drum to form a breaker cylinder; a tread conveyor for feeding tread strip material to the second drum over the breaker cylinder to form a breaker and tread cylinder; a transfer ring to axially convey the breaker and tread cylinder from the second drum onto the periphery of the carcass supported on the first drum for the assembly of a green tire and to then transport the green tire to an intermediate location; stitching means to stitch the tread strip material and the breaker strip material to the carcass; a robot to transport the carcass to the first drum and the green tire from the transfer ring; an output station adapted to receive the green tire transported thereto by the robot; and programmable control means to coordinate the movement of the servicer, conveyor, transfer ring and robot in a continuous and automatic cycle of operation and to receive signals from the servicer and the camage indicative of the lengths of the breaker material and the tread material and, in response thereto, to vary the relative speed of movement between the second drum, the servicer and the conveyor. The tire building machine further includes positive drive means for the conveyor belts, such positive drive means including a toothed belt and toothed pulleys for the positive driving of the belt and conveyed material, and for the precise input of belt location to the control means.

The foregoing has outlined rather broadly the more pertinent and important features of the present invention in order that the detailed description of the invention that follows may be better understood so that the present contribution to the art can be more fully appreciated. Additional features of the invention will be described hereinafter which form the subject of the claims of the invention. It should be appreciated by those skilled in the art that the conception and the specific embodiment disclosed may be readily utilized as a basis for modifying or designing other structures for carrying out the same purposes of the present invention.

For a fuller understanding of the nature and objects of the invention, reference should be had to the following detailed description taken in connection with the accompanying drawings in which:

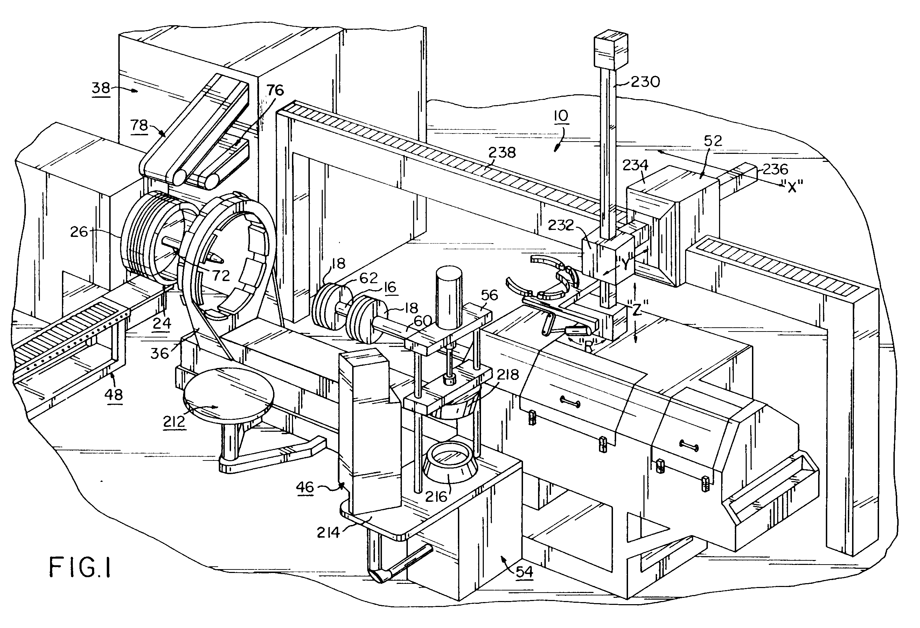

Figure 1 is a perspective illustration of a second stage tire building machine constructed in accordance with the principles of the present invention.

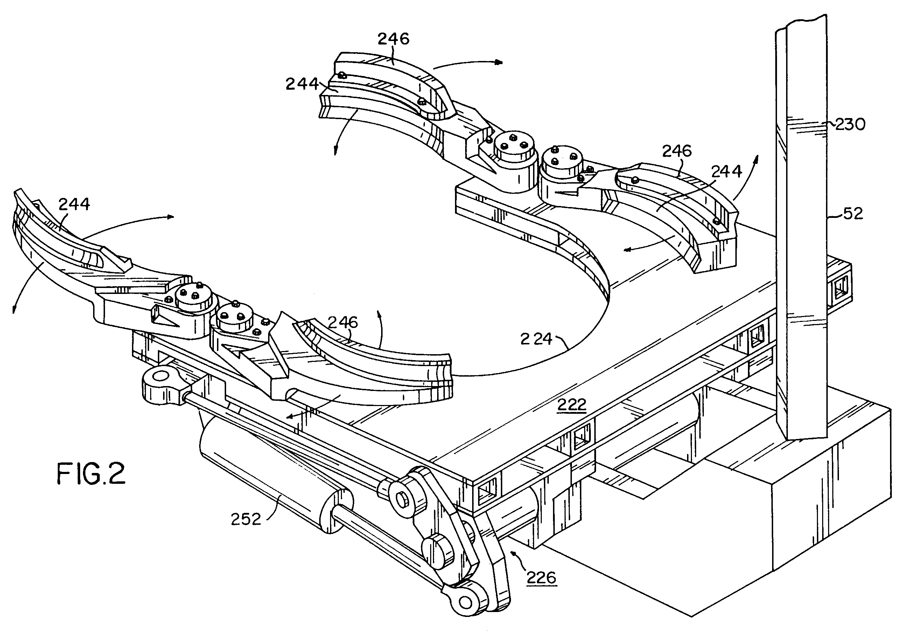

Figure 2 is an enlarged perspective illustration of the gripping portion of the robot as seen in Figure 1.

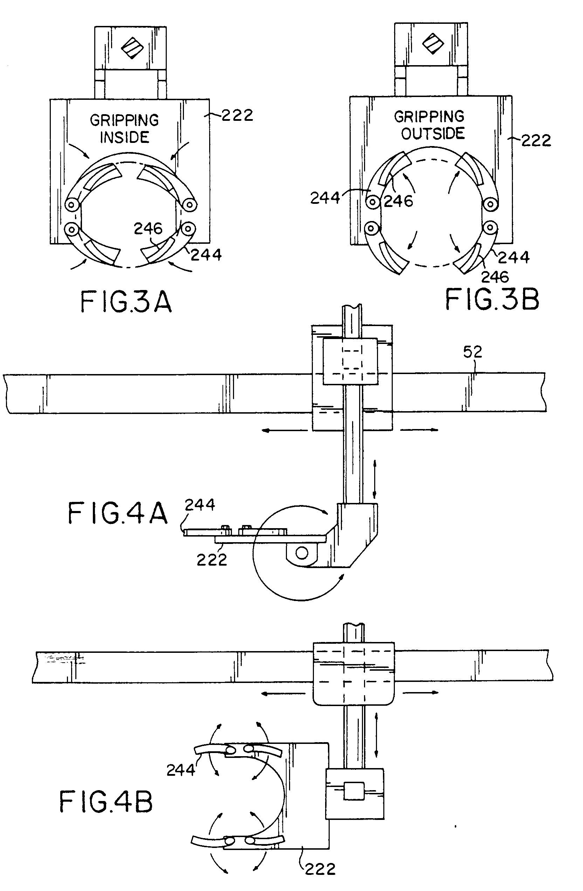

Figures 3A and 3B are plan views of the gripping portion of the robot shown in Figure 2 illustrating the gripping fingers in alternate operational positions.
Figures 4A and 4B are side elevational and plan views of the gripping portion of the robot as shown in Figures 2, 3A and 3B.
Figures 5A-5H are illustrations of the first stage tire carcass and robot showing their movements from the input station to the first station of the tire building machine as shown in Figure 1.

Similar reference characters refer to similar parts through the several views of the drawings.

The second stage tire building machine 10 of the present invention is depicted in the attached drawings. It is comprised of a plurality of assemblies, subassemblies and components operable together for its purpose of converting a generally cylindrically shaped carcass 12 into a toroid-shaped green tire ready for vulcanization. The machine includes a first or carcass drum assembly or station 16 formed of spaced flanges 18 adapted to receive and support the carcass 12. It functions to expand the carcass 12 into a toroid shape for the receipt of a breaker and tread cylinder for the formation of the green tire.

The machine also includes a second or breaker drum assembly or station 24 formed of a collapsible drum 26 rotatable about an axis aligned with, but axially offset from, the axis of the flanges 18 of the carcass drum assembly. The breaker drum is adapted to receive strips of breaker material and a strip of tread material and to position them in a superposed relationship to form the breaker and tread cylinder. The breaker and tread cylinder is then transported axially from the breaker drum assembly 24 to the carcass 12 at the carcass drum assembly 16 by a transport ring 36 which is axially shiftable between the two drum assemblies.

A third assembly is the servicer assembly or station 38 which is adapted to convey breaker material along paths of travel from supply rolls, past cutter and tip aligner subassemblies, to the breaker drum 26. The conveying of the breaker material is at an appropriate speed and in an appropriately timed sequence to effect the desired result of a continuous and repeatable breaker tread cylinder. The servicer assembly includes the framing support structures as well as the conveyor belts and control mechanisms 46 for effecting the appropriate conveying of the breaker material to the breaker drum. The control mechanisms include belts, pulleys and sensors to input a controller for determining material position and thus allow for the intended operation and control of the machine. A tread conveyor 48, operable in association with the servicer, functions for feeding precut strips of tread material onto the surface of the superposed strips of breaker material on the breaker drum 26.

The machine also includes a robot assembly 52 for conveying the tire carcass 12 from a loading station 54 to the carcass drum assembly 16. The loading station includes a pre-inflator 56 where the carcass 12 is initially placed by an operator after being carried or otherwise transported from a first stage tire building machine, the place of carcass fabrication. The robot assembly 52 is also adapted to convey the carcass with the breaker and tread cylinder stitched thereto, the green tire ready for vulcanization, to a final or inspection station whereat the operator may view and inspect the green tire and then carry or otherwise transport such green tire to the curing press for vulcanization.

Also included within the machine is an operator programmable control assembly 46 for coordinating the operation of the various assemblies, subassemblies and components in their intended continuous and automatic cycle of operation with minimum operator involvement.

The carcass drum assembly 16 includes a cantilevered member 60 with a free outboard end and an inboard end supported by the machine for rotation by suitable drive mechanisms. Adjacent to its outboard end are a pair of carcass-receiving flanges 18 of similar construction, an inboard flange and an outboard flange. Each flange is of a generally conical configuration for receiving the internal edges of a carcass 12. The carcass-receiving surface of each flange is provided with an elastomeric membrane 62 which communicates by internal conduits with a source of air under pressure whereby the membranes may be inflated to sufficiently increase in diameter to form an air-tight seal with a supported carcass. A further source of air under pressure is coupled with the interior of the carcass through a conduit in the member for the inflation of the carcass supported by the flanges. Such air flows are conventional.

The flanges 18 are mounted on the cantilevered member or shaft 60 through a concentric shaft and the sleeve arrangement. The outboard flange supported by the shaft and inboard flange supported by the sleeve are axially shiftable by drive mechanisms toward and away from each other equally and oppositely. Movement toward each other is performed concurrently with the inflation of the carcass in order to convert the cylindrical carcass into a toroid shape. As a result of the construction and arrangement of the components of the carcass drum assembly, the supported carcass is deformed and inflated in order to receive a breaker and tread cylinder brought into an encompassing position by the transfer ring. With the transfer ring 36 and the breaker and tread cylinder encircling the inflated carcass, the carcass is further inflated to contact the interior surface of the breaker and tread cylinder for adhesion therebetween. The transfer ring is expanded to release the breaker and tread cylinder. The transfer ring is then axially displaced toward the breaker drum 26 to an intermediate location for exposing the periphery of the breaker and tread cylinder.

The breaker drum subassembly 24 includes a collapsible drum 26 rotatable about an axis which is coextensive with, but offset from, the axis of the flanges 18 of the carcass drum assembly 16. The breaker drum assembly includes a cantilevered shaft 72 with a free outboard end and an inboard end supported and driven by the machine. Its outboard end supports the collapsible breaker drum 26 which is located at an axially spaced interval from the carcass drum assembly.

The breaker drum 26 is adapted to be rotated through the shaft 72 whereby it will receive and support a first applied breaker strip from the first conveyor 76 of the servicer assembly and a subsequently applied second breaker strip from another or second conveyor 78 of the servicer assembly. The first breaker strip will completely overlie the surface of the expanded breaker drum with no overlap or gap at its opposite ends. The second breaker strip is slightly longer than the first since it will overlie the first breaker strip on the breaker drum, also with no overlap or gap between its opposite ends. The breaker strips, when together on the breaker drum, form the breaker cylinder. The cutting of the breaker strips and their positioning onto the breaker drum is effected without operator involvement in a continuous and automatic cycle of operation.

Overlying the second breaker strip is the tread strip, fed to the rotating breaker drum from the side thereof opposite the servicer. In operation and use, the breaker and tread strips are fed into superposed position onto the breaker drum to form the breaker and tread cylinder. The only operator involvement is the placing of the tread strip on its conveyor 48 and the hand stitching of the trailing edge of the tread strip for completion of the breaker and tread cylinder to be attached to the carcass.

With the breaker and tread cylinder gripped by the transfer ring 36, the breaker drum is then collapsed to a reduced diameter so that the transfer ring may contact, grasp and then axially shift the breaker and tread cylinder to a position over and encompassing the carcass. The carcass is then expanded to contact the breaker and tread cylinder for adherence therebetween. The transfer ring is then expanded to release the breaker and tread cylinder and then move to a location between the two drum assemblies during the final stitching of the green tire. Thereafter, the transfer ring is moved to encompass the stitched green tire through the contraction of its segments. The exhausting of the air from the green tire and the separation of the flanges releases the green tire from the carcass drum assembly. The transfer ring 36 then moves the green tire to a location between the drum assemblies 16 where it is picked up by the robot. The segments are then expanded and the transfer ring 36 returned to the breaker drum assembly to pick up the next breaker and tread cylinder while the robot conveys the green tire to the inspection station.

The servicer assembly 38 may be considered as comprising the structures of the material support subassembly 40 and 42; the breaker feed subassembly 76 and 78 for conveying the breaker material to the breaker drum, and the cutter and tip aligner subassembly 44 located along the path of travel of the breaker material for cutting the breaker material fed from a supply roll into strips and for feeding such strips to the breaker drum. The servicer assembly also functions in association with the tread feed subassembly 48 located adjacent to the breaker drum but remote from the servicer assembly for feeding previously cut strips of tread material to the breaker drum.

The robot 52 functions to move the carcass 12, previously constructed at the first stage tire building machine, not shown, from the pre-inflator 56 at the loading station 54, onto the flanges of the carcass drum. It then moves the carcass 12 with a breaker and tread cylinder thereon, the green tire, from the transfer ring 36 between the two drum assemblies, to an inspection station 212 for viewing by the operator. The inspection station is simply a table with an upper surface for supporting the green tire with its axis positioned vertically. The loading station 54, however, includes a table 214 having a conically shaped support 216 for retaining a carcass spaced from the table with its axis oriented vertically. Above the carcass is a sealing cone 218 movable into and out of contact with the upper edge of the carcass. An aperture through the center of the cone allows for the introduction of a short burst of air, from a source of compressed air, into the carcass sealed by the cones to return the carcass to its cylindrical orientation in the event that it has been deformed during storage.

The robot 52 includes a flat rectangular plate 222 with an arcuate cutout 224 extending inwardly from the first or remote edge to form a semicircle with a radius slightly larger than the radius of the carcass when unexpanded. The second or near edge is supported by a motion imparting mechanism 226 for essentially universal movement. The motion imparting mechanism is, in turn, mounted to a vertical guide bar 230 for raising and lowering the plate by movement through an actuatable first drive carriage 232 in the Z meridian or vertically. The first drive carriage is mounted on a second drive carriage 234. The second drive carriage is actuatable to move a short horizontal guide bar 236 in the X meridian. The second drive carriage is movable upon a long horizontal guide bar 238 in the Y meridian, also horizontally. The three guide bars and two drive carriages function together from controller signals to impart the necessary three meridian horizontal and vertical movements to the robot plate and its arms in order to effect its intended functions. Signals from the controller also effect the opening and closing of the arms on the robot plate.

Located on the plate on opposite sides of the cutout adjacent to the side edges are pairs of arms 244 pivotally secured to the plate by drive pins for moving the arms 244. The free ends of the arms are formed with curved flanges 246, or gripping surfaces, extending outwardly from the plate. The formed arms are generally movable concurrently between first open or separated positions where the arms are located remote from the cutout and second closed or adjacent positions where the arms are located to overlie the cutout. The flanges have smooth radially interior surfaces whereby they are moved inwardly to grasp the exterior of a carcass from a pre-inflator at the loading station and to move the grasped carcass onto the carcass drum 16.

The exterior surfaces of the flanges 246 of the arms 244 are shaped to be inserted into an end of the green tire supported by the transfer ring between the carcass and breaker drums. When expanded, the robot grasps the green tire and transports it to an inspection station remote from the machine.

The gripping of the carcass by the arms 244 of the robot 52 occurs at the circumferential edge of the carcass where the bead is located. The bead is an inextensible cord and, as a result, the gripping will not stretch the carcass and will thereby ensure a more reliable gripping and retention of the gripped carcass by the arms 244.

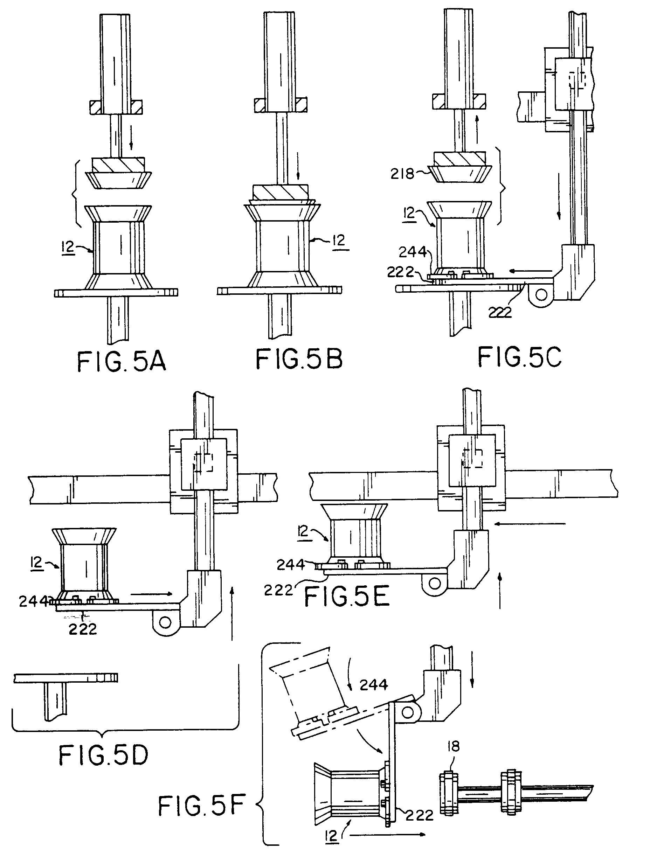

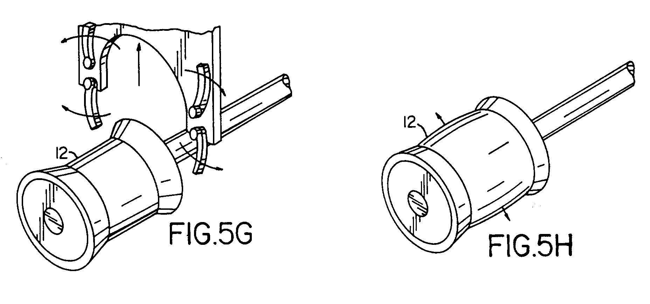

In operation and use, the plate 222 is initially held horizontally adjacent the pre-inflator and moved forward by the first drive carriage 232 with the plate located beneath the lower edge of the carcass. The pre-inflator provides an initial burst of air to the carcass to return the carcass to its essentially cylindrical shape. The retracted arms 244 are then pivoted inwardly toward the lower edge of the carcass for grasping it. The grasped carcass is then moved upwardly a slight extent to clear the lower cone 216 of the pre-inflator. It is then horizontally withdrawn therefrom. The carcass and plate may then be inverted by the universal mechanism by rotary movement in an R meridian about an axis with the carcass depending from the horizontal plate to minimize deformation of the carcass during its movement. The movement is upwardly by the first drive carriage 232 and then horizontally in one or both meridians by the second drive carriage 234 above the carcass drum and the two guide bars. The network of two horizontal and one vertical guide rails define the path of movement of the robot as determined by the controller driving the two drive carriages. Note Figures 5A through 5F.

The plate 222 is then held vertically with the carcass supported on a horizontal axis, parallel with, but offset from the axis of the carcass drum 16. The plate and carcass are then arcuately moved, plate side first, over the outboard flange of the carcass drum until the edges of the carcass overlie the outboard and inboard flanges 18. After the carcass has been let go, the flanges are pneumatically expanded radially into contact with the interior edges of the carcass for its support whereafter the arms 244 of the robot are expanded and the plate lifted to allow for the inflation of the carcass through the introduction of air to the interior of the carcass concurrent with the axial movement of the flanges toward each other. This continues the carcass assumes a toroid shape. The sealing of the carcass is effected prior to bringing the flanges together.

After the transfer ring 36 has moved a breaker and tread cylinder from the breaker drum 26 to encircle the carcass or the carcass drum, the carcass is further inflated to contact and adhere to the interior surface of the breaker and tread ring. At this point, the transfer ring 36 is expanded and axially shifted away to an intermediate location between the two drum assemblies so that a stitcher may secure the breaker and tread cylinder to the carcass 12 thereby completing the green tire ready for vulcanization. The transfer ring 36 is then moved back to the green tire on the carcass drum whereat it is contracted to support the green tire while the air therein is depressurized. The transfer ring is then axially shifted to a location intermediate the carcass and breaker drums. The robot 52 is then moved with its plate 222 held vertically and its arms totally contracted so that the flanges of the arms are within one end of the green tire, that end facing the carcass drum. At this point the arms 244 are then expanded so that the exterior surfaces of the flanges of the robot grasp the green tire from its interior edge. The robot, with the green tire depending therefrom, is moved to the table 212 at the inspection station whereat the arms are contracted and the green tire deposited on the surface of table. The transfer ring 36 is then axially shifted for grasping the next breaker and tread cylinder in a continuing cycle of operation. When the transfer ring releases the green tire for being transported by the robot 52, the transfer ring 36 then begins moving toward the breaker and tread cylinder while the robot 52 moves to pick up the next carcass 12 at the loading station in a continuing, automatic cycle of operation.

The motors 252 for opening and closing the arms 244 in a predetermined cycle of operation are all controlled automatically from the controller 46 at an operator station. A robot of this type is commercially available as a gantry type robot manufactured and sold by The C & D Machine & Engineering Company of Port Neches, Texas. The movement, sequence and timing of the robot may be modified by the operator.

A controller assembly 46 dictates the operational events of the second stage tire building machine and the method of operation as described above including the carcass and breaker drum assemblies 24, the servicer assembly 38, the cutter and tip aligner assembly and the robot assembly 52. The controller 46 is fully programmable by the operator through the control panel to vary the mode of operation of the various assemblies and component subassemblies and elements as may be desired to accommodate the fabrication of green tires of various characteristics from carcasses and breaker and tread strips of various characteristics.

The controller 46 provides the operator with various timed windows of operation such as for bringing the carcass onto the pre-inflator at the input station 214 and for removing the green tire from the inspection or output station. A window of operation is meant to be a predetermined time period in the sequence of operation of the machine during which the operator must perform a particular task or step in the sequence of operations otherwise the machine will cease its next sequential function and stop its further functioning. Another window of operation is provided for placing a tread strip on the tread conveyor. In all other aspects, the controller drives the machine continuously and automatically without operator involvement.

The method of operation basically involves the fabricating of a green tire from a carcass 12 on a second stage tire building machine including the steps of providing a first inboard station for loading, shaping and stitching a first stage tire carcass, providing an outboard second station 24 axially offset from the first station for assembling a breaker and tread cylinder, feeding breaker strips to the second station, feeding a tread strip to the second station 24 for the completion of the breaker tread and cylinder, transporting the breaker and tread cylinder from the second station 24 onto the periphery of the carcass 12 for the formation of a green tire by a transfer ring 36 and then transporting the green tire to an intermediate location to transport the carcass to the first station 16 and the green tire to a final location by a robot 52, and coordinating the movement of the breaker strip, tread strip, transfer ring and robot by a controller 46 in a continuous and automatic cycle of operation.

The various sensors and control functions act together to synchronize the various component elements, subassemblies and assemblies of the machine. They also allow for the programmability of such functions to provide flexibility through the controller, all precisely determined by the precise measurements initiated with the toothed timing belts and the associated sensors.

## Claims

1. A robot (52) for transporting a cylindrical tire carcass (12) and a cylindrical green tire between various processing locations of a tire building machine, **characterized** by
arms (244) with contoured free ends movable toward each other to thereby grasp the exterior cylindrical surface of a carcass (12), the free ends also being movable away from each other to thereby grasp the interior cylindrical surface of a green tire;
transport means (232,234) to move the arms (244) between a pick up location (54), a tire building machine (10), and an inspection location (212); and
control means (46) adapted to move the arms (244) toward each other at the pick up location (54) to grasp the exterior cylindrical surface of a carcass (12) and to activate the transport means to convey the grasped carcass to the tire building machine (10), the control means (46) also adapted to move the arms (244) away from each other at the tire building machine (10) to grasp the interior cylindrical surface of a green tire and to activate the transport means (232,234) to convey the grasped green tire to the inspection location (212).

2. A robot (52) as set forth in claim 1, **characterized** by
arms (244) with contoured free ends movable toward each other to grasp the exterior cylindrical surface of a carcass (12), the free ends also being movable away from each other to grasp the interior cylindrical surface of a green tire;
a plate (222) having a cutout (224) extending between the arms (244) from one edge thereof;
pivot means on opposite sides of the cutout (224) for movably supporting the arms (244) with respect to the plate (222), the arms (244) being formed with flanges (246) extending away from the plate (222) with their interior surfaces contoured to substantially conform with an exterior cylindrical edge of a carcass (12) and with their exterior surfaces contoured to substantially conform to the interior cylindrical edge of a green tire.

3. A method of transporting a cylindrical tire carcass (12) and a cylindrical green tire between various processing locations, **characterized** by
providing a robot (52) having arms (244) with contoured free ends movable toward each other to grasp the exterior cylindrical surface of a carcass (12) and movable away from each other to grasp the interior cylindrical surface of a green tire;
moving the robot (52) between a pick up location (54), a tire building machine (10), and an inspection location (212);
closing the arms (244) by pivotal movement toward each other at the pick up location (54) to grasp the exterior cylindrical surface of a carcass (12) and then transporting the grasped carcass (12) to the tire building machine (10) by the moving of the robot (52); and;
opening the arms (244) by pivotal movement away from each other at the tire building machine (10) to grasp the interior cylindrical surface of a green tire and then transporting the grasped green tire to the inspection location by the moving of the robot (52).

## Patentansprüche

1. Robotor (52) zum Transportieren einer zylindrischen Reifenkarkasse (12) und eines zylindrischen Reifenrohlings zwischen verschiedenen Bearbeitungsstationen einer Reifenaufbaumaschine,
**gekennzeichnet durch**
Arme (244) mit konturierten freien Enden, die aufeinander zu bewegbar sind, um die zylindrische Außenfläche einer Karkasse (12) zu greifen, wobei die freien Enden ferner voneinander weg bewegbar sind, um die zylindrische Innenfläche eines Reifenrohlings zu greifen;
eine Transporteinrichtung (232,234) zum Bewegen der Arme (244) zwischen einer Ladestation (54), einer Reifenaufbaumaschine (10) und einer Inspektionsstation (212); und
eine Steuereinrichtung (46), die in der Lage ist, an der Ladestation (54) die Arme (244) aufeinander zu zu bewegen, um die zylindrische Außenfläche einer Karkasse (12) zu greifen, und die Transporteinrichtung derart zu aktivieren, daß die gegriffene Karkasse zu der Reifenaufbaumaschine (10) transportiert wird, und die ferner in der Lage ist, an der Reifenaufbaumaschine (10) die Arme (244) voneinander weg zu bewegen, um die zylindrische Innenfläche eines Reifenrohlings zu greifen, und die Transporteinrichtung (232,234) derart zu aktivieren, daß der gegriffene Reifenrohling zu der Inspektionsstation (212) bewegt wird.

2. Robotor (52) nach Anspruch 1,
**gekennzeichnet durch**
Arme (244) mit konturierten freien Enden, die aufeinander zu bewegbar sind, um die zylindrische Außenfläche einer Karkasse (12) zu greifen, wobei die freien Enden ferner voneinander weg bewegbar sind, um die zylindrische Innenfläche eines Reifenrohlings zu greifen;
eine Platte (222) mit einem Ausschnitt (224), der sich von einem Rand der Platte (222) zwischen den Armen (244) erstreckt,
an einander gegenüberliegenden Seiten des Ausschnitts (224) angeordnete Schwenkeinrichtungen zum beweglichen Halten der Arme (244) relativ zu der Platte (222), wobei an den Armen (244) von der Platte (222) abstehende Flansche (246) ausgebildet sind, deren Innenflächen derart konturiert sind, daß sie dem zylindrischen Außenrand einer Karkasse (12) im wesentlichen konform sind, und deren Außenflächen derart konturiert sind, daß sie dem zylindrischen Innenrand eines Reifenrohlings im wesentlichen konform sind.

3. Verfahren zum Transportieren einer zylindrischen Reifenkarkasse (12) und eines zylindrischen Reifenrohlings zwischen verschiedenen Bearbeitungsstationen,
**gekennzeichnet durch**
die folgenden Verfahrensschritte:
Bereitstellen eines Roboters (52), der Arme (244) mit konturierten freien Enden aufweist, welche aufeinander zu bewegbar sind, um die zylindrische Außenfläche einer Karkasse (12) zu greifen, und voneinander weg bewegbar sind, um die zylindrische Innenfläche eines Reifenrohlings zu greifen;
Bewegen des Roboters (52) zwischen einer Ladestation (54), einer Reifenaufbaumaschine (10) und einer Inspektionsstation (212);
an der Ladestation (54) erfolgendes Schließen der Arme (244) durch eine Schwenkbewegung der Arme aufeinander zu, um die zylindrische Außenfläche einer Karkasse (12) zu greifen und anschließend durch die Bewegung des Roboters (52) die gegriffene Karkasse (12) zu der Reifenaufbaumaschine (10) zu bewegen; und
an der Reifenaufbaumaschine (10) erfolgendes Öffnen der Arme (244) durch eine Schwenkbewegung der Arme voneinander weg, um die zylindrische Innenfläche eines Reifenrohlings zu greifen und anschließend durch die Bewegung des Roboters (52) den gegriffenen Reifenrohling zu der Inspektionsstation zu bewegen.

## Revendications

1. Un robot (52) pour transporter une carcasse de bandage pneumatique cylindrique (12) et un bandage pneumatique cylindrique cru entre divers emplacements de traitement d'une machine de construction de bandage pneumatique, caractérisé par :
des bras (244) à extrémités libres conformées mobiles l'une vers l'autre pour ainsi saisir la surface cylindrique extérieure d'une carcasse (12), les extrémités libres mobiles pour s'écarter l'une de l'autre pour saisir ainsi la surface cylindrique intérieure d'un bandage pneumatique cru ;
des moyens de transport (232, 234) pour mouvoir les bras (244) entre un emplacement de ramassage (54), une machine de construction de bandage pneumatique (10) et un emplacement d'inspection (212) ; et
des moyens de commande (46) adaptés pour mouvoir les bras (244) l'un vers l'autre à l'emplacement de ramassage (54) pour saisir la surface cylindrique extérieure d'une carcasse (12) et pour activer les moyens de transport pour transporter la carcasse saisie jusqu'à la machine de construction de bandage pneumatique (10), les moyens de commande (46) étant également adaptés pour écarter les bras (244) l'un de l'autre à la machine de construction de bandage pneumatique (10) pour saisir la surface cylindrique intérieure d'un bandage pneumatique cru et pour activer les moyens de transport (232, 234) pour transporter le bandage pneumatique cru saisi jusqu'à l'emplacement d'inspection (212).

2. Un robot (52) tel qu'exposé dans la revendication 1, caractérisé par :
des bras (244) à extrémités libres conformées mobiles l'une vers l'autre pour saisir la surface cylindrique extérieure d'une carcasse (12), les extrémités libres étant également mobiles pour s'écarter l'une de l'autre pour saisir la surface cylindrique interne d'un bandage pneumatique cru ;
une plaque (222) ayant une découpe (224) s'étendant entre les bras (244) depuis un bord de celle-ci ;
des moyens formant pivot sur des côtés opposés de la découpe (224) pour supporter mobilement les bras (244) par rapport à la plaque (222), les bras (244) étant pourvus de rebords (246) s'étendant en s'éloignant de la plaque (222) en ayant leurs surfaces intérieures conformées pour épouser sensiblement un bord cylindrique extérieur d'une carcasse (12) et en ayant leurs surfaces extérieures conformées pour épouser sensiblement le bord cylindrique intérieur d'un bandage pneumatique cru.

3. Un procédé de transport d'une carcasse de bandage pneumatique cylindrique (12) et un bandage pneumatique cylindrique cru entre divers emplacements de traitement, caractérisé par :
la fourniture d'un robot (52) ayant des bras (244) à extrémités libres conformées mobiles l'une vers l'autre pour saisir la surface cylindrique extérieure d'une carcasse (12) et mobiles pour s'écarter l'une de l'autre pour saisir la surface cylindrique intérieure d'un bandage pneumatique cru ;
le mouvement du robot (52) entre un emplacement de ramassage (54), une machine de construction de bandage pneumatique (10) et un emplacement d'inspection (212) ;
la fermeture des bras (244) par leur mouvement pivotant l'un vers l'autre à l'emplacement de ramassage (54) pour saisir la surface cylindrique extérieure d'une carcasse (12) et transporter ensuite la carcasse saisie (12) jusqu'à la machine de construction de bandage pneumatique (10) par le mouvement du robot (52) ; et
l'ouverture des bras (244) par leur mouvement pivotant d'écartement l'un de l'autre à la machine de construction de bandage pneumatique (10) pour saisir la surface cylindrique intérieure d'un bandage pneumatique cru et transporter ensuite le bandage pneumatique cru saisi jusqu'à l'emplacement d'inspection par le mouvement du robot (52).
